# EUROPEAN PATENT APPLICATION

(11) **EP 2 458 475 A2**
(43) Date of publication of application: **30.05.2012**
(21) Application number: 11184805.7
(22) Date of filing: 12.10.2011
(51) Int. Cl.: G06F 3/023

(54) **Searching device, searching method and computer-readable storage medium**

(30) Priority: 25.11.2010 JP 2010262098
(71) Applicant: Aisin AW Co., Ltd., Fuji-cho Anjo-shi Aichi 444-1192 (JP)
(72) Inventor: Kawauchi, Hiroshi, Anjo-shi, Aichi 444-1192 (JP)
(74) Representative: TBK

(57) **Abstract**

The present invention proposes a searching device comprising an input string acquisition unit that acquires an input string input by a user, a predicted candidate string extracting unit that extracts a predicted candidate string that begins with the input string, a deleted character determining unit that acquires a deleted character deleted from the input string, and that determines a deleted character position that is a character position of the deleted character in the input string, and a changing unit that, on the basis of the deleted character and the deleted character position, changes a priority of the predicted candidate string that begins with the input string from which the deleted character has been deleted.

## Description

### INCORPORATION BY REFERENCE

The disclosure of Japanese Patent Application No. 2010-262098 filed on November 25, 2010 including the specification, drawings and abstract is incorporated herein by reference in its entirety.

### BACKGROUND OF THE INVENTION

### 1. Field of the Invention

The present invention relates to a searching device, a searching method and a computer-readable storage medium.

### 2. Description of the Related Art

In a related art, there is known a searching device that, on the basis of a string input through user's operation, searches for a word, or the like, that includes the input string. Incidentally, a character that is not intended by a user may be input through user's erroneous operation. The technique described in Japanese Patent Application Publication No. 2007-140900 (JP-A-2007-140900) does not accept an input operation of a character on which correction instructions have been issued so as not to input a wrong character again.

### SUMMARY OF INVENTION

However, the technique described in JP-A-2007-140900 does not consider anything about the point that a character on which correction instructions have been issued is used in searching for a word, or the like. The present invention provides a searching device, searching method and computer-readable storage medium that enhance the prediction accuracy of a predicted candidate string that is predicted on the basis of a string input by a user.

A first aspect of the present invention provides a searching device. The searching device includes: an input string acquisition unit that acquires an input string input by a user; a predicted candidate string extracting unit that extracts a predicted candidate string that begins with the input string; a deleted character determining unit that acquires a deleted character deleted from the input string, and that determines a deleted character position that is a character position of the deleted character in the input string; and a changing unit that changes a priority of the predicted candidate string that begins with the input string from which the deleted character has been deleted on the basis of the deleted character and the deleted character position.

According to the above first aspect, it is possible to increase the prediction accuracy of a predicted candidate string on the basis of a deleted character and a deleted character position.

A second aspect of the present invention provides a searching method. The searching method includes: acquiring an input string input by a user; extracting a predicted candidate string that begins with the input string; acquiring a deleted character deleted from the input string, and determining a deleted character position that is a character position of the deleted character in the input string; and changing a priority of the predicted candidate string that begins with the input string from which the deleted character has been deleted on the basis of the deleted character and the deleted character position.

According to the above second aspect, a similar advantageous effect to that of the searching device according to the first aspect is obtained.

A third aspect of the present invention provides a computer-readable storage medium that stores computer-executable instructions for performing a searching function. The searching function includes: acquiring an input string input by a user; extracting a predicted candidate string that begins with the input string; acquiring a deleted character deleted from the input string, and determining a deleted character position that is a character position of the deleted character in the input string; and changing a priority of the predicted candidate string that begins with the input string from which the deleted character has been deleted on the basis of the deleted character and the deleted character position.

According to the above third aspect, a similar advantageous effect to that of the searching device according to the first aspect is obtained.

### BRIEF DESCRIPTION OF DRAWINGS

The features, advantages, and technical and industrial significance of this invention will be described below with reference to the accompanying drawings, in which like numerals denote like elements, and wherein:
FIG. 1 is a block diagram that shows the configuration of a searching device according to a first embodiment of the present invention;
FIG. 2 is a view that illustrates a predicted keyword table stored in a predicted keyword storage unit according to the first embodiment of the present invention;
FIG. 3 is a view that illustrates a character input screen according to the first embodiment of the present invention;
FIG. 4A and FIG. 4B are views that illustrate character management according to the first embodiment of the present invention, in which FIG. 4A is a view that illustrates an input character management table, and FIG. 4B is a view that illustrates a deleted character management table;
FIG. 5 is a flowchart that illustrates a predicted candidate string extracting process according to the first embodiment of the present invention;
FIG. 6 is a flowchart that illustrates a display subject selecting process according to the first embodiment of the present invention;
FIG. 7A, FIG. 7B and FIG. 7C are views that illustrate display examples of predicted candidate strings according to the first embodiment of the present invention;
FIG. 8A and FIG. 8B are views that respectively illustrate a specific example of an input character management table and a specific example of a deleted character management table according to the first embodiment of the present invention;
FIG. 9 is a view that illustrates changes of scores based on a deleted character according to the first embodiment of the present invention;
FIG. 10 is a view that illustrates a specific example of a deleted character management table according to a second embodiment of the present invention;
FIG. 11 is a view that illustrates changes of scores based on a deleted character according to the second embodiment of the present invention;
FIG. 12 is a flowchart that illustrates a predicted candidate string extracting process according to a third embodiment of the present invention;
FIG. 13A and FIG. 13B are views that illustrate a specific example of a deleted character management table according to the third embodiment of the present invention;
FIG. 14 is a view that illustrates changes of scores based on a deleted character according to the third embodiment of the present invention;
FIG. 15 is a flowchart that illustrates a predicted candidate string extracting process according to a fourth embodiment of the present invention;
FIG. 16 is a view that illustrates a specific example of a deleted character management table according to the fourth embodiment of the present invention; and
FIG. 17 is a view that illustrates changes of scores based on a deleted character according to the fourth embodiment of the present invention.

### DETAILED DESCRIPTION OF EMBODIMENTS

Hereinafter, searching devices according to embodiments of the present invention will be described with reference to the accompanying drawings.

### First Embodiment

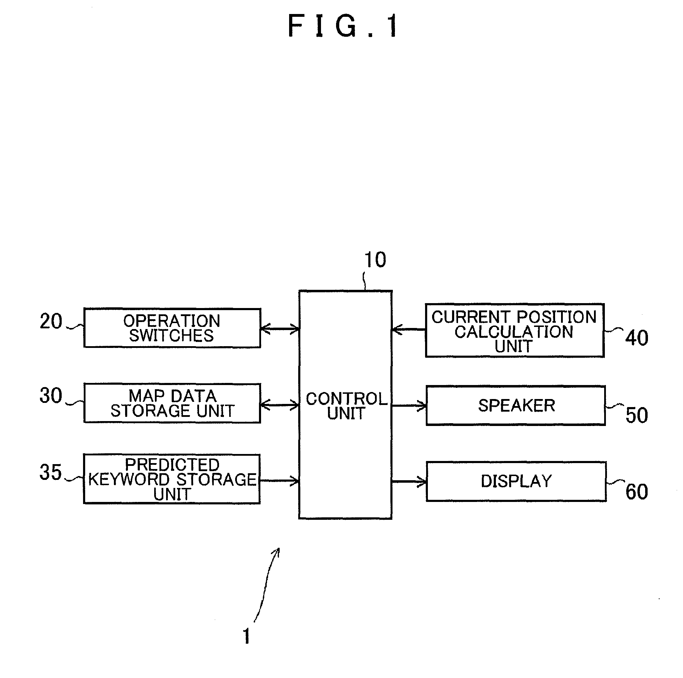

A searching device according to the first embodiment of the present invention is applied to a navigation system equipped for a vehicle. FIG. 1 is a block diagram that shows the overall configuration of a navigation system 1 that serves as the searching device.

The navigation system 1 is configured mainly by a control unit 10. Operation switches 20, a map data storage unit 30, a predicted keyword storage unit 35, a current position calculation unit 40, a speaker 50, a display 60, and the like, are connected to the control unit 10. The control unit 10 is formed as a computer that includes a CPU, a ROM, a RAM, an input/output port and a bus line that connects them. The control unit 10 governs control over the entire system. The operation switches 20 are formed of touch switches integrated with the display 60, mechanical switches, a remote control unit, or the like, and are used in various input operations. In the present embodiment, the operation switches 20 include touch switches integrated with the display 60.

The map data storage unit 30 is, for example, a storage device that is implemented as a hard disk drive (HDD). Although the HDD is used here, another medium, such as a DVD-ROM and a memory card, may be used instead. The map data storage unit 30 stores so-called map matching data for improving the accuracy of position detection and map data for searching for a route. The map data include various pieces of data, and include facility information associated with a facility as one of the various pieces of data. The facility information is specifically point of interest (POI) information stored in association with an ID that determines a facility. The POI information includes information that indicates a facility name, a facility ID, coordinates of position, a type (genre), an address, and the like.

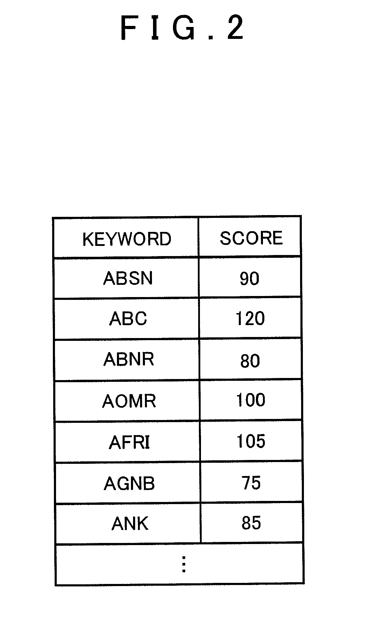

The predicted keyword storage unit 35 stores keywords from which one or more predicted candidate strings (one or more predicted candidate keywords) that begin with an input string input by a user are extracted. In the present embodiment, as shown in FIG. 2, scores that are numeric values regarding priorities used when predicted candidate strings are extracted are associated with the respective keywords, and the keywords and the associated scores are stored in the predicted keyword storage unit 35 as a predicted keyword table. In the present embodiment, as the score associated with a keyword becomes higher, a higher priority is given to extracting a predicted candidate string.

Referring back to FIG. 1, the current position calculation unit 40 calculates the current position of the vehicle. The current position calculation unit 40, for example, includes a geomagnetic sensor, a gyroscope, a distance sensor, a global positioning system (GPS) receiver, and the like. The GPS receiver receives radio waves from satellites. These devices respectively have errors and characteristics of the errors are different from each other. Thus, the devices are used while complementing one another. The current position calculation unit 40 is able to calculate the current position of the vehicle in real time. The speaker 50 is used to output voice, and is, for example, used when a route guidance, or the like, is performed by voice. The display 60 is a color display device that is formed using a liquid crystal, or the like. A map, facility information, or the like, is displayed on the display 60. In addition, a character input screen for inputting a character is displayed on the display 60.

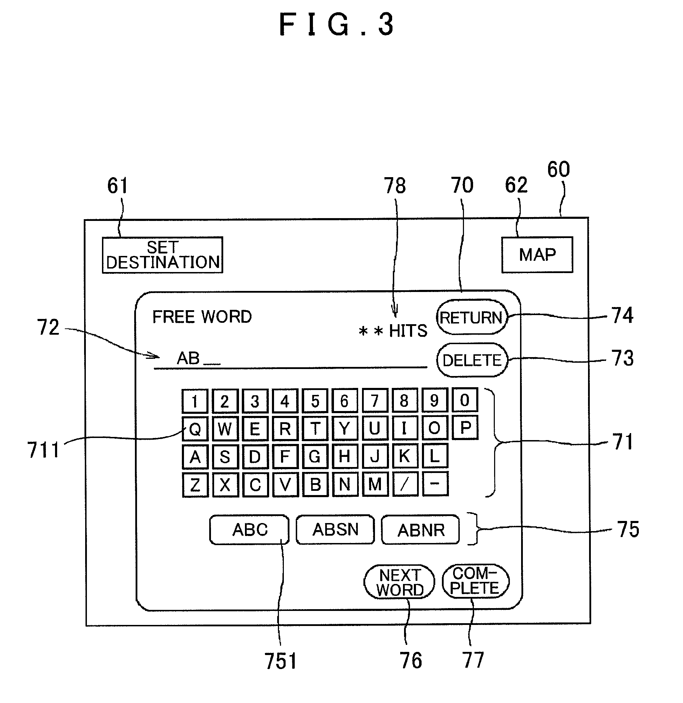

Here, the character input screen displayed on the display 60 will be described with reference to FIG. 3. A destination setting button 61 for setting a destination, a map button 62 for displaying a map and a character input screen 70 are displayed on the display 60. The character input screen 70 includes an input character table 71, an input string display field 72, a delete button 73, a return button 74, a predicted candidate string display field 75, a next word button 76, a complete button 77, a count display field 78, and the like.

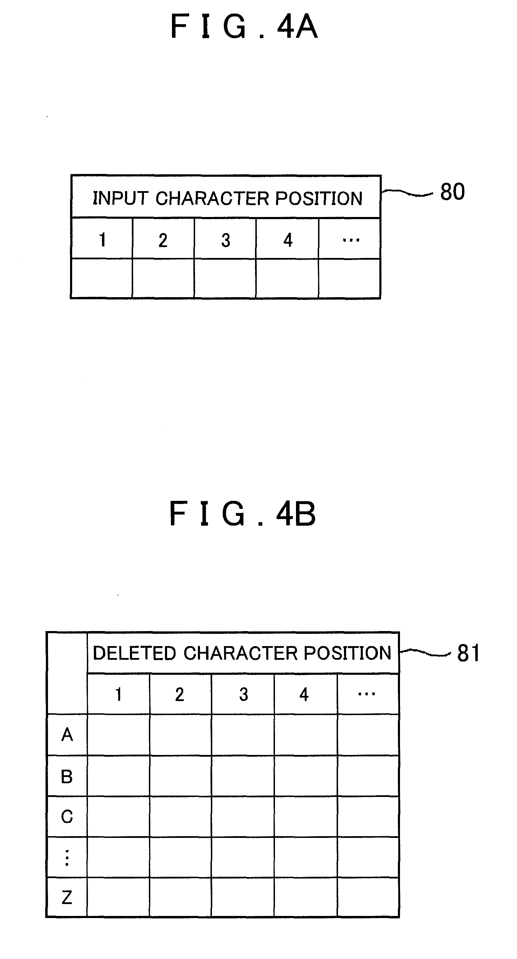

The input character table 71 is formed of a plurality of character buttons 711. The character buttons 711 respectively correspond to alphabets, symbols, and the like. When one of the character buttons 711 is selected by a user, a character corresponding to the selected character button 711 is displayed on the input string display field 72, and is stored in an input string management table 80 shown in FIG. 4A. In the present embodiment, a string stored in the input string management table 80 is regarded as an "input string". For example, when the character buttons 711 corresponding to characters "A" and "B" are selected in this order by the user, a string "AB" is displayed on the input string display field 72, and the character "A" is stored in the field corresponding to the first character of the input string management table 80 and the character "B" is stored in the field corresponding to the second character. Input characters selected by the user using the character buttons 711 of the input character table 71 are displayed on the input string display field 72. In the example shown in FIG. 3, a state where the characters "A" and "B" are input is shown, and a cursor (underscore) that prompts the user to input the next character is displayed behind the input characters.

The delete button 73 is a button used to delete an input character. When the delete button 73 is selected, the last character of the characters displayed on the input string display field 72 is deleted, and the last input character is deleted from the input string management table 80. In addition, the deleted character and the character position of the deleted character deleted from the input string are stored in a deleted character management table 81 shown in FIG. 4B. For example, when the delete button 73 is selected in a state where the string "AB" is input, the last character "B" is deleted from the input string display field 72 and the input string management table 80, and information that indicates that the character is deleted is stored in the field corresponding to the character "B" at the second character position in the deleted character management table 81. In the present embodiment, in order to decrease a priority given to extracting a predicted candidate string, a predetermined numeric value for reducing a score is stored as the information that indicates that a character is deleted.

The return button 74 is a button used to return to a screen that had been displayed before the character input screen 70 is displayed. The predicted candidate string display field 75 is formed of a plurality of predicted candidate string buttons 751. A predicted candidate string that begins with an input string is displayed on the predicted candidate string button 751 on the basis of priority. In the present embodiment, there are three predicted candidate string buttons 751, so three of the extracted predicted candidate strings, having higher priorities, are displayed from the left. Note that, in the present embodiment, the number of the predicted candidate string buttons 751 is three; instead, the number of buttons may be any number. The next word button 76 is a button used to display the next predicted candidate strings on the predicted candidate string buttons 751. The complete button 77 is a button used to fix an input string displayed on the input string display field 72. The number of predicted candidate strings that begin with an input string is displayed on the count display field 78. Note that the destination setting button 61, the map button 62, the character buttons 711, the delete button 73, the return button 74, the next word button 76 and the complete button 77 constitute the operation switches 20.

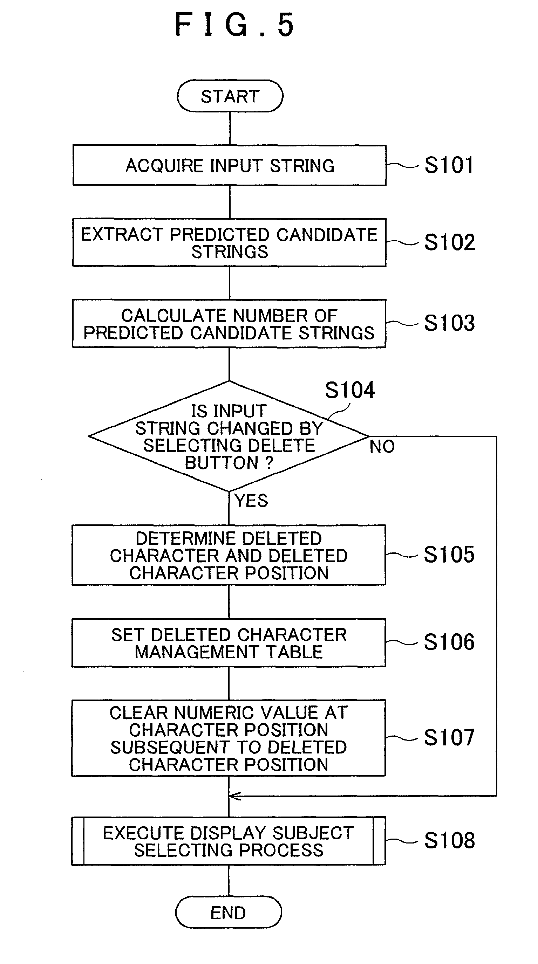

Next, a predicted candidate string extracting process executed at the time when the input string management table 80 is changed will be described with reference to the flowchart shown in FIG. 5. Note that the case where the input string management table 80 is changed includes the case where any one of the character buttons 711 in the input character table 71 is selected to add a new character to an input string and the case where the delete button 73 is selected to delete a character from an input string. In the case where the delete button 73 is selected to change an input string, a delete flag is set.

In the first step S101 (hereinafter, "step" is abbreviated as "S"), an input string input by a user is acquired from the input string management table 80. In S102, one or more predicted candidate strings that begin with the input string are extracted on the basis of the input string acquired in S101. In S 103, the number of the predicted candidate strings extracted in S102 is calculated. The calculated number of the predicted candidate strings is displayed on the count display field 78. In S104, it is determined whether the input string is changed by selecting the delete button 73. When it is determined that the input string is not changed by selecting the delete button 73 (NO in S104), that is, when the delete flag is not set and the character button 711 is selected to add a new character to the input string, the process proceeds to S108. When it is determined that the input string is changed by selecting the delete button 73 (YES in S104), that is, when the delete flag is set, the process proceeds to S105.

In S105, a deleted character deleted by selecting the delete button 73 is acquired, and a deleted character position that is the character position of the deleted character in the input string is determined. In S106, the deleted character management table 81 is set on the basis of the deleted character and deleted character position that are determined in S105. In the present embodiment, the one or more priorities of the predicted candidate strings, in each of which the character located at the deleted character position is the deleted character, are decreased. Accordingly, in the deleted character management table 81, a predetermined numeric value for reducing the score is set in the field corresponding to the deleted character at the deleted character position. In S 107, in the deleted character management table 81, a numeric value for changing the score at the character position subsequent to the deleted character position is cleared. In S108, the display subject selecting process of selecting a display subject to be displayed on the predicted candidate string display field 75 is executed. Note that, when the delete flag is set, the delete flag is reset after the process ends.

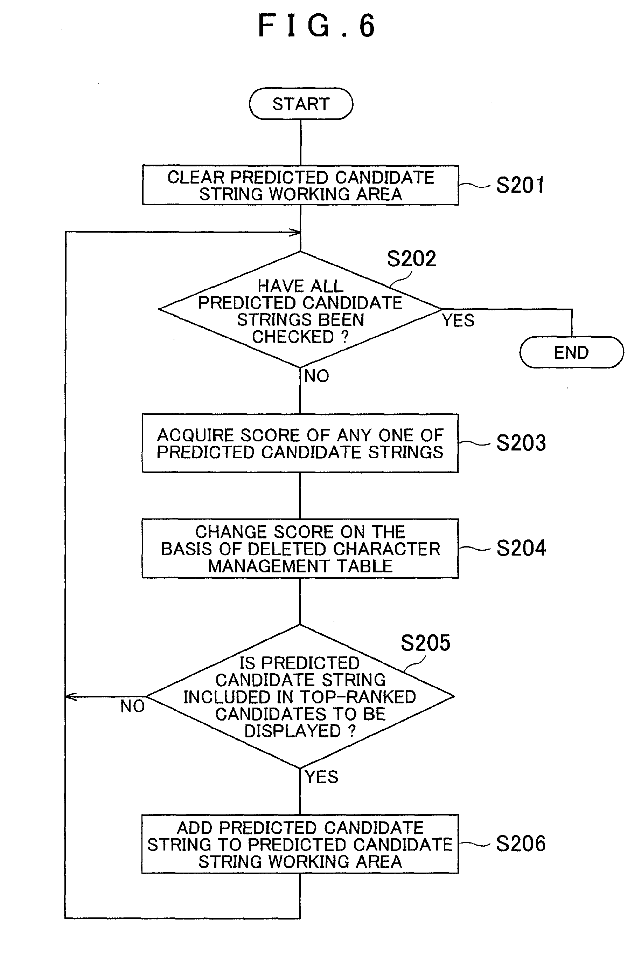

The display subject selecting process executed in S108 will be described with reference to the flowchart shown in FIG. 6. In S201, a predicted candidate string working area is cleared. In S202, it is determined whether all the predicted candidate strings extracted in S 102 have been checked (according to the processes in S203 to S205, described later). When it is determined that all the predicted candidate strings have been checked (YES in S202), the process ends. When it is determined that all the predicted candidate strings have not been checked (NO in S202), the process proceeds to S203. Note that the processes in S203 to S206 are sequentially executed for each of the extracted predicted candidate strings.

In S203, the predicted keyword table is consulted, and the score of any one of the predicted candidate strings is acquired. In S204, the deleted character management table 81 is consulted, and the score acquired in S203 is changed. Note that, when no numeric value for changing the score of the corresponding predicted candidate string is stored in the deleted character management table 81, the score of the predicted candidate string is not changed. In the present embodiment, the process in which the deleted character management table 81 is consulted and the score of the predicted candidate string is changed is regarded as the process of "changing the priority of a predicted candidate string". Note that the process in which a negative numeric value for changing the score is set in S106, and then the score is changed in S204 is regarded as the process of "decreasing the priority of a predicted candidate string". In addition, the process in which a positive numeric value for changing the score is set in S106, and then the score is changed in S204 is regarded as the process of "increasing the priority of a predicted candidate string".

In S205, it is determined whether the predicted candidate string is included in top-ranked candidates to be displayed. Determination as to whether the predicted candidate string is included in the top-ranked candidates to be displayed is made on the basis of the score of the predicted candidate string and the scores of the other predicted candidate strings stored in the predicted candidate string working area. When it is determined that the predicted candidate string is not included in the top-ranked candidates to be displayed (NO in S205), that is, when the score of the predicted candidate string is lower than the scores of the other predicted candidate strings stored in the predicted candidate string working area, the process returns to S202. When it is determined that the predicted candidate string is included in the top-ranked candidates to be displayed (YES in S205), that is, when the score of the predicted candidate string is higher than the score of any one of the other predicted candidate strings stored in the predicted candidate string working area, the process proceeds to S206.

In S206, the predicted candidate string is stored in the predicted candidate string working area in decreasing order of score, and the predicted candidate string having the lowest score among the predicted candidate strings stored in the predicted candidate string working area is deleted from the predicted candidate string working area. Then, the predicted candidate strings stored in the predicted candidate string working area at the time when all the predicted candidate strings have been checked are set as display subjects, and are displayed on the predicted candidate string display field 75.

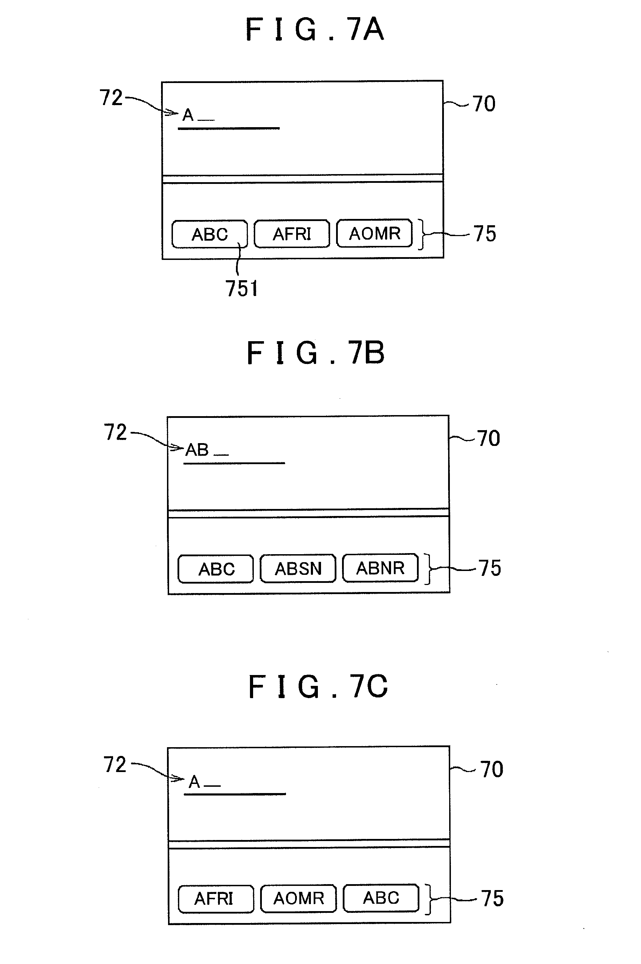

Here, a specific example of a character deleting process and a specific example of the predicted candidate string extracting process will be described with reference to FIG. 7A to FIG. 9. Note that, in FIG. 7A to FIG. 7C, in the character input screen 70, the input character table 71, and the like, are not shown, and only the input string display field 72 and the predicted candidate string display field 75 are shown. As shown in FIG. 7A, when a first character "A" is input, the character "A" is stored as the first character in the input string management table 80, and the string "A" is acquired as an input string (S101). Then, predicted candidate strings that begin with the input string "A" are extracted (S102), and the number of the extracted predicted candidate strings is calculated (S103). Here, because the delete button 73 is not selected (NO in S104), the display subject selecting process is subsequently executed (S108), and then the strings "ABC", "AFRI" and "AOMR" are displayed as the predicted candidate strings on the predicted candidate string display field 75 in decreasing order of score.

As shown in FIG. 7B, when the second character "B" is input after the first character "A", the character "B" is stored as the second character in the input string management table 80, and then the string "AB" is acquired as an input string (S101). Then, predicted candidate strings that begin with the input string "AB" are extracted (S102), and the number of the extracted predicted candidate strings is calculated (S103). Here, because the delete button 73 is not selected (NO in S104), the display subject selecting process is subsequently executed (S108), and then the strings "ABC", "ABSN" and "ABNR" are displayed as the predicted candidate strings on the predicted candidate string display field 75 in decreasing order of score.

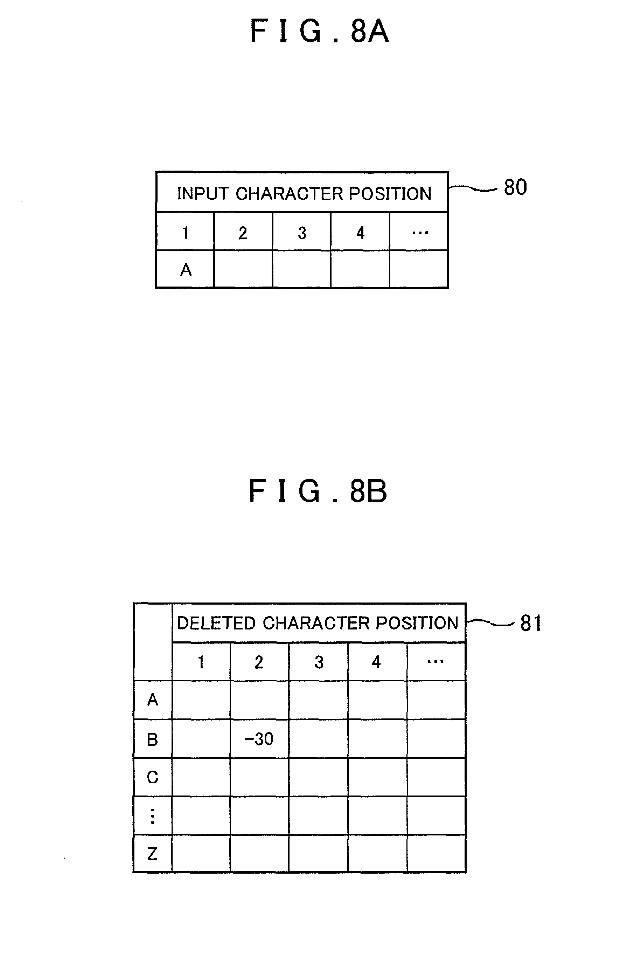

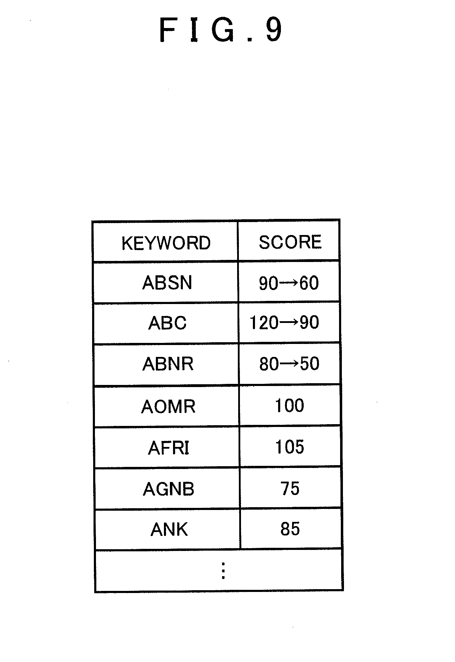

As shown in FIG. 7C, when the string "AB" is input and then the delete button 73 is selected, the second character "B" that is the last character is deleted. At this time, as shown in FIG. 8A, in the input string management table 80, the character "B" stored as the second character is deleted, and the character "A" remains stored as the first character. Thus, the string "A" is acquired as an input string (S101). Then, predicted candidate strings that begin with the input string "A" are extracted (S102), and the number of the extracted predicted candidate strings is calculated (S103). Here, because the delete button 73 is selected (YES in S104), the character "B" is acquired as a deleted character, and the deleted character is determined to be the second character in the input character (S105). Here, as shown in FIG. 8B, a predetermined numeric value for reducing the score, that is, "-30" in the present embodiment, is set in the field that corresponds to the character "B" at the second character position that is the deleted character position in the deleted character management table 81 (S106). Then, when the display subject selecting process is executed (S 108), the deleted character management table 81 is consulted, and 30 is subtracted from the scores of the predicted candidate strings "ABSN", "ABC" and "ABNR", in each of which the second character is "B" (S204, see FIG. 9). Then, as a result of changing the scores on the basis of the deleted character, as shown in FIG. 7C, the strings "AFRI", "AOMR" and "ABC" are displayed on the predicted candidate string display field 75 in decreasing order of score.

That is, when FIG. 7A is compared with FIG. 7C, the input strings stored in the input string management table 80 and the strings displayed on the input string display field 72 are the same; however, the priorities are changed on the basis of the deleted character in the example shown in FIG. 7C, so the predicted candidate strings displayed on the predicted candidate string display field 75 are different between FIG. 7A and FIG. 7C. In this way, in the present embodiment, a priority of a predicted candidate string that the user desires to select may be increased on the basis of a deleted character, and thus, the predicted candidate string that the user desires to select may be displayed on the predicted candidate string display field 75. By so doing, the convenience of the user improves.

As described in detail above, in the control unit 10 of the navigation system 1, an input string input by the user is acquired (S101 in FIG. 5), and then one or more predicted candidate strings that begin with the input string are extracted (S102). In addition, a deleted character deleted from the input string is acquired, and a deleted character position that is the character position of the deleted character in the input string is determined (S105). Then, on the basis of the deleted character and the deleted character position, the one or more priorities of the predicted candidate strings that begin with the input string from which the deleted character has been deleted are changed (S204 in FIG. 6). By so doing, it is possible to increase the prediction accuracy of a predicted candidate string on the basis of the deleted character and the deleted character position.

In the present embodiment, the one or more priorities of the predicted candidate strings, in each of which the character located at the deleted character position is the deleted character, and that begin with the input string from which the deleted character has been deleted are decreased (S204). By so doing, the priority of a predicted candidate string may be appropriately changed on the basis of the deleted character to make it possible to increase the prediction accuracy of the predicted candidate string.

### Second Embodiment

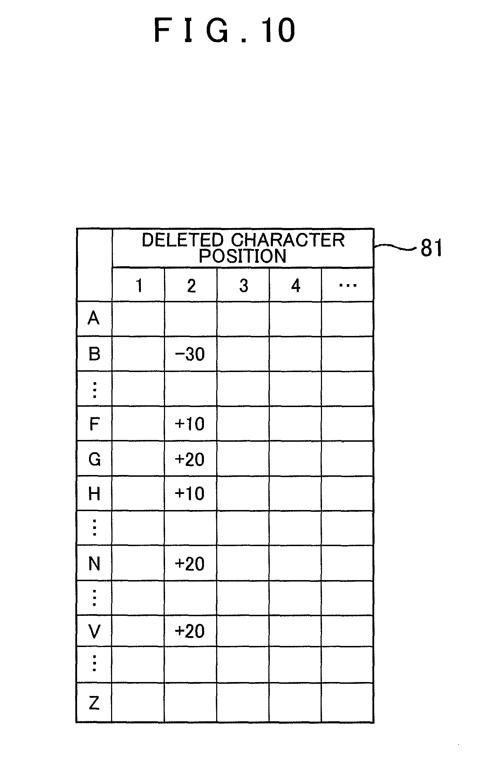

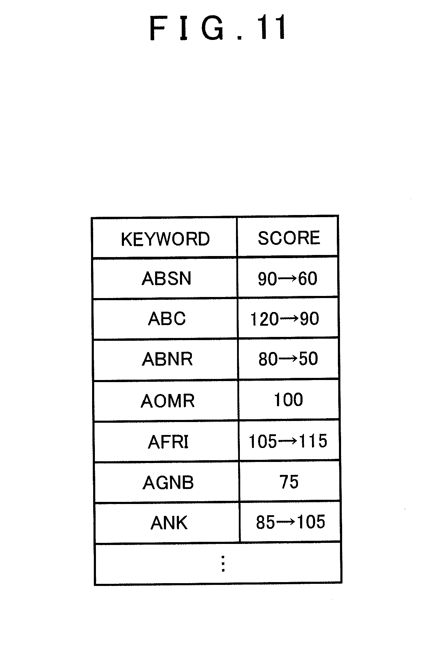

A searching device according to a second embodiment of the present invention will be described with reference to FIG. 10 and FIG. 11. The present embodiment differs from the first embodiment only in the process of S 106 in FIG. 5. Thus, only the difference from the first embodiment will be described, and the description of the other configuration, process, and the like, is omitted. When the delete button 73 is selected and an input character is deleted, there is a possibility that the user intended to select a surrounding character that is a character arranged at an input position around the deleted character in the input character table 71 but the user erroneously selected the deleted character. Then, in the present embodiment, in S 106 of FIG. 5, a predetermined numeric value for reducing the score is set in the field corresponding to the deleted character at the deleted character position in the deleted character management table 81, and predetermined numeric values for increasing the score are set in the fields in the deleted character management table 81, corresponding to surrounding characters arranged at input positions around the deleted character in the input character table 71. Thus, one or more priorities of predicted candidate strings, in each of which the character located at the deleted character position is any one of the surrounding characters, increase. By so doing, a priority of a predicted candidate string that the user desires to select may be increased on the basis of the deleted character, and thus, the predicted candidate string that the user desires to select may be displayed on the predicted candidate string display field 75, so the convenience of the user improves.

For example, when the second character "B" is deleted, the surrounding characters arranged at the input positions around the character "B" in the input character table 71 are the characters "F", "G", "H", "N" and "V" (see FIG. 3). Accordingly, as shown in FIG. 10, a predetermined numeric value for reducing the score is set in the field that corresponds to the character "B" at the second character position in the deleted character management table 81, and predetermined numeric values for increasing the score are set in the fields that correspond to the characters "F", "G", "H", "N" and "V" at the second character position in the deleted character management table 81. In the present embodiment, in order to further increase the priorities of the characters "G", "N" and "V" that are adjacent to the deleted character "B" in the vertical direction or horizontal direction in the input character table 71, numeric values for increasing the scores of the characters "G", "N" and "V" are larger than numeric values for increasing the scores of the characters "F" and "H" that are arranged obliquely to the deleted character "B" in the input character table 71. Specifically, +20 is set in the fields corresponding to the characters "G", "N" and "V" in the deleted character management table 81, and +10 is set in the fields corresponding to the characters "F" and "H" in the deleted character management table 81 (S106). In other words, it means that "the priorities are changed according to arrangement of the input character table". Thus, in the present embodiment, in S204 of FIG. 6, when the deleted character management table 81 shown in FIG. 10 is consulted to change the scores, the resultant scores are as shown in FIG. 11, and the strings "AFRI", "ANK" and "AOMR" are displayed on the predicted candidate string display field 75 in decreasing order of score.

Note that, for example, when the second character "B" is deleted and then the character "T" is input at the second character position and is deleted, similarly, a predetermined numeric value for reducing the score may be set in the field corresponding to the character "T" at the second character position in the deleted character management table 81, and predetermined numeric values for increasing the score may be set in the fields in the deleted character management table 81, corresponding to the surrounding characters arranged at the input positions around the character "T" in the input character table 71. At this time, a numeric value set in the field in the deleted character management table 81, corresponding to the character "G" arranged between the deleted characters "B" and "T" in the input character table 71 is the largest. Thus, the one or more priorities of the predicted candidate strings, in each of which the second character is "G", increase.

In the present embodiment, an input string is acquired on the basis of an input character input by the user from among the plurality of characters arranged in the input character table 71 (S101). In addition, the one or more priorities of the predicted candidate strings that begin with the input string from which the deleted character has been deleted, in each of which the character located at the deleted character position is any one of surrounding characters arranged at input positions around the deleted character in the input character table 71, are increased (S204). By so doing, the priority of a predicted candidate string may be appropriately changed on the basis of the deleted character to thereby make it possible to increase the prediction accuracy of the predicted candidate string.

### Third Embodiment

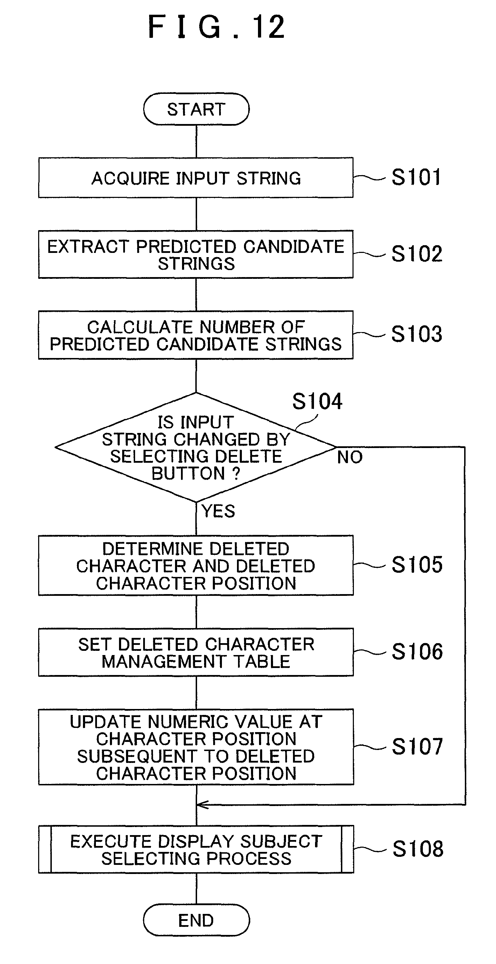

A searching device according to a third embodiment of the present invention will be described with reference to FIG. 12 to FIG. 14. The present embodiment differs from the first embodiment in the predicted candidate string extracting process. Thus, only the difference from the first embodiment will be described, and the description of the other configuration, process, and the like, is omitted. The predicted candidate string extracting process according to the third embodiment will be described with reference to the flowchart shown in FIG. 12. The flowchart shown in FIG. 12 differs from the flowchart shown in FIG. 5 only in S107, so only the process of S107 will be described, and the description of the processes of the other steps is omitted.

In S107 in FIG. 12, when a numeric value for changing the score is set at the character position subsequent to the deleted character position, the numeric value is updated. In the present embodiment, when a negative numeric value is set at the character position subsequent to the deleted character position as the numeric value for changing the score, the numeric value is updated with a positive numeric value. Thus, one or more priorities of predicted candidate strings, in each of which the character located at a character position behind the deleted character position of the latest deleted character, increase. By so doing, the priority of a predicted candidate string that the user desires to select may be increased on the basis of the deleted character deleted at a character position behind the deleted character position of the latest deleted character, and thus, the predicted candidate string that the user desires to select may be displayed on the predicted candidate string display field 75, so the convenience of the user improves. In addition, when a positive numeric value is set at the character position subsequent to the deleted character position as the numeric value for changing the score, the numeric value for changing the score at the character position subsequent to the deleted character position is cleared.

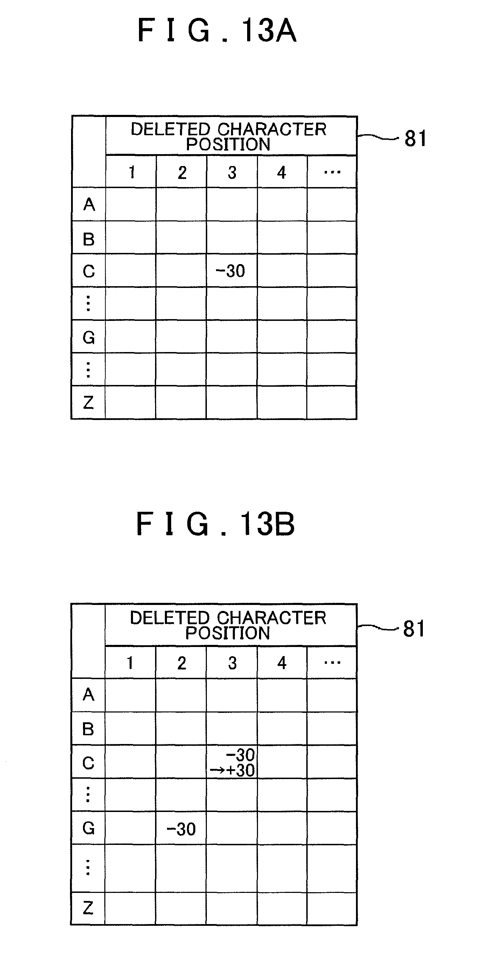

A specific example of the predicted candidate string extracting process according to the present embodiment will be described with reference to FIG. 13A and FIG. 13B. Here, when a string "AGC" is input and then the delete button 73 is selected to delete the character "C", as shown in FIG. 13A, a predetermined numeric value for reducing the score, that is, -30 in this example, is set in the field corresponding to the character "C" at the third character position in the deleted character management table 81. Then, the predicted candidate string extracting process executed when the delete button 73 is further selected to delete the character "G" subsequently to the character "C" will be described.

When the string "AGC" is input and then the character "C" and, subsequently, the character "G" are deleted, as shown in FIG. 13B, a predetermined numeric value for reducing the score, that is, "-30" in the present embodiment, is set in the field corresponding to the character "G" at the second character position in the deleted character management table 81 (S106). As in the case of the present embodiment, when a plurality of characters are deleted successively, there is a possibility that the character that the user desires to correct is the second character "G". More specifically, there is a possibility that the third character "C" is just deleted in order to delete the second character "G" and the third character is an effective character. Then, in the present embodiment, updating is performed so as to increase the score of the third character "C" that is the deleted character located at a character position behind the deleted character position of the deleted character "G". Here, as shown in FIG. 13B, in order to set the numeric value for changing the score set in the field corresponding to the character "C" at the third character position in the deleted character management table 81 to a positive numeric value, -30 is updated with +30 in this example.

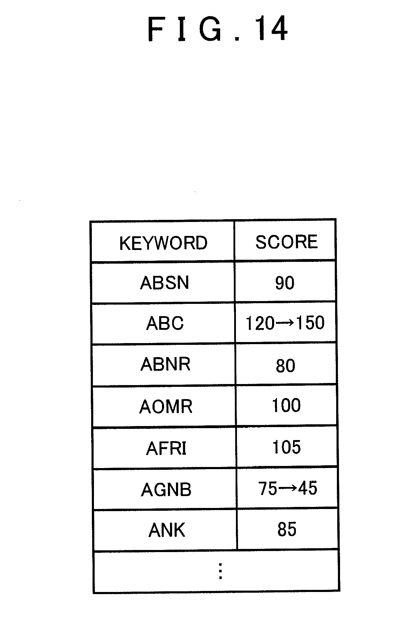

When the score is thus changed, as shown in FIG. 14, 30 is subtracted from the score of the predicted candidate string "AGNB" in which the second character is "G", and 30 is added to the score of the predicted candidate string "ABC" in which the third character is "C". As a result, the strings "ABC", "AFRI" and "AOMR" are displayed on the predicted candidate string display field 75 in decreasing order of score. Note that, in this example, the character "C" of which the deleted character position is a third character position and the character "G" of which the deleted character position is a second character position are regarded as the "plurality of deleted characters of which the deleted character positions are different", and the character "G" that is deleted subsequently to the character "C" is regarded as the "latest deleted character".

In the present embodiment, when it is determined that a plurality of acquired deleted characters are located at different deleted character positions, one or more priorities of predicted candidate strings that begin with an input string from which the plurality of deleted characters have been deleted, in each of which the character located at a character position behind the deleted character position of the latest deleted character is the deleted character of which the character position is determined to be the deleted character position, are increased (S204). By so doing, a priority of a predicted candidate string may be appropriately changed on the basis of the deleted character located behind the deleted character position of the latest deleted character to thereby make it possible to increase the prediction accuracy of the predicted candidate string.

### Fourth Embodiment

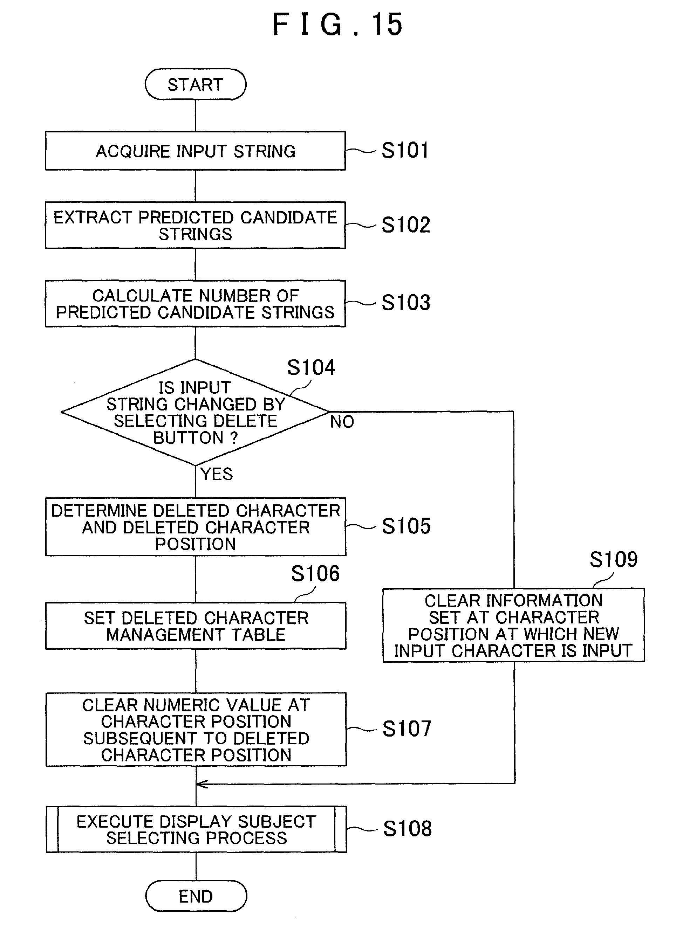

A searching device according to a fourth embodiment of the present invention will be described with reference to FIG. 15 to FIG. 17. The predicted candidate string extracting process according to the present embodiment will be described with reference to the flowchart shown in FIG. 15. The predicted candidate string extracting process shown in FIG. 15 is executed when the input string management table 80 is changed as in the case of the predicted candidate string extracting process according to the first embodiment and differs from the predicted candidate string extracting process according to the first embodiment only in the process in the case where negative determination is made in S104.

That is, in the present embodiment, when it is determined that the input string is not changed by selecting the delete button 73 (NO in S104), that is, when the delete flag is not set and any one of the character buttons 711 is selected to add a new character to the input string, the process proceeds to S109. In S109, information about changing the priority set at the character position at which a new input character is input is cleared from the deleted character management table 81, and then the process proceeds to S108. By so doing, one or more priorities of the predicted candidate strings, each of which has been given the priority that is changed on the basis of the deleted character of which the deleted character position is an input character position at which a new input character is input, return to original priorities. Note that, instead of the process of S 107, the process of S107 according to the third embodiment shown in FIG. 12 may be executed.

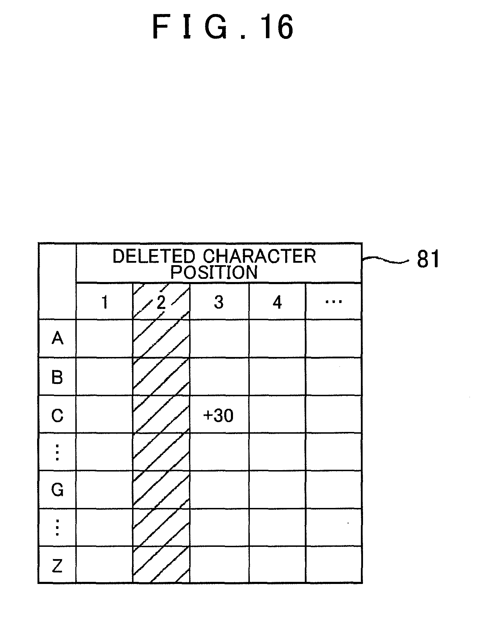

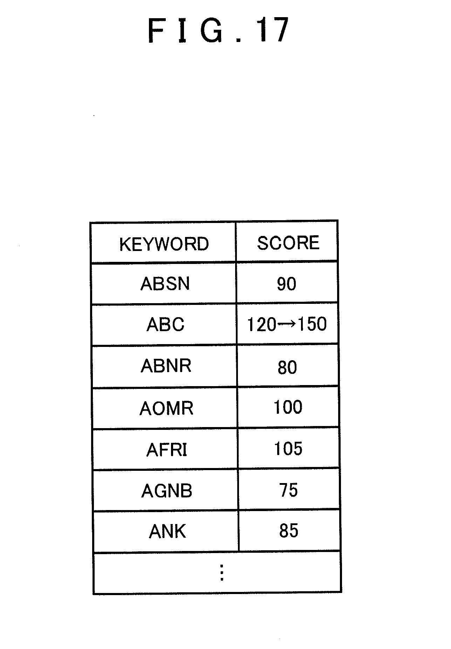

For example, description will be made using the example described in the third embodiment. When the string "AGC" is input and then the characters "C" and "G" are successively deleted and, after that, the character "B" is newly input at the second character position, as shown in FIG. 16, numeric values for changing the scores stored at the second character position in the deleted character management table 81 are cleared (S109). By so doing, as shown in FIG. 17, the score of the predicted candidate string "AGNB" in which the second character is the deleted character "G" returns to the original score. Note that the process of clearing a numeric value for changing the score of a newly input character position is regarded as the process of "returning a priority of a predicted candidate string of which the priority has been changed on the basis of a deleted character (a second deleted character) of which a deleted character position is a character position at which a newly input character is input".

In the present embodiment, when a newly input character is input at a deleted character position, one or more priorities of the predicted candidate strings, each of which has been given the priority that is changed on the basis of the deleted character of which the deleted character position is a character position at which a new input character is input, return to original priorities (priorities before having been changed on the basis of the deleted character of which the deleted character position is the character position at which the new input character is input). By so doing, it is possible to increase the prediction accuracy of a predicted candidate string.

In the above embodiments, the control unit 10 serves as an "input string acquisition unit", a "predicted candidate string extracting unit", a "deleted character determining unit" and a "changing unit". In addition, the process of S101 corresponds to the process that implements the function of the "input string acquisition unit", the process of S 102 corresponds to the process that implements the function of the "predicted candidate string extracting unit", the process of S105 corresponds to the process that implements the function of the "deleted character determining unit", and the process of S204 corresponds to the process that implements the function of the "changing unit".

As described above, the aspect of the present invention is not limited to the above embodiments; it may be implemented in various forms without departing from the scope of the invention. In the above embodiments, one or more priorities of predicted candidate strings, in each of which the character located at a deleted character position is a deleted character, are decreased; instead, in an alternative embodiment, instead of decreasing the priorities, one or more applicable keywords may be excluded from predicted candidate strings. In the above embodiments, an input string is acquired and subsequently one or more predicted candidate strings that begin with the input string are extracted; instead, in an alternative embodiment, the process shown in FIG. 6 may be executed on all the keywords included in a predicted keyword table, and, subsequent to the process of S202, the process of determining whether a predicted candidate string begins with the input string may be executed.

In the above embodiments, the searching device is embodied as the navigation system; instead, in an alternative embodiment, the searching device may be an information terminal, such as a cellular phone and a personal computer. In addition, in the above embodiments, the control unit 10 serves as an "input string acquisition unit", a "predicted candidate string extracting unit", a "deleted character determining unit" and a "changing unit". In an alternative embodiment, programs for causing a computer and a storage medium for storing the programs may be employed to function as these units. In addition, a searching method that executes processes corresponding to these units may be employed.
The present invention proposes a searching device comprising an input string acquisition unit that acquires an input string input by a user, a predicted candidate string extracting unit that extracts a predicted candidate string that begins with the input string, a deleted character determining unit that acquires a deleted character deleted from the input string, and that determines a deleted character position that is a character position of the deleted character in the input string, and a changing unit that, on the basis of the deleted character and the deleted character position, changes a priority of the predicted candidate string that begins with the input string from which the deleted character has been deleted.

## Claims

1. A searching device comprising:
an input string acquisition unit that acquires an input string input by a user;
a predicted candidate string extracting unit that extracts a predicted candidate string that begins with the input string;
a deleted character determining unit that acquires a deleted character deleted from the input string, and that determines a deleted character position that is a character position of the deleted character in the input string; and
a changing unit that, on the basis of the deleted character and the deleted character position, changes a priority of the predicted candidate string that begins with the input string from which the deleted character has been deleted.

2. The searching device according to claim 1, wherein
the changing unit decreases the priority of the predicted candidate string in which a character located at the deleted character position is the deleted character and that begins with the input string from which the deleted character has been deleted.

3. The searching device according to claims 1 or 2, wherein
the input string acquisition unit acquires the input string on the basis of an input character input by the user from among a plurality of characters arranged on an input character table, and
the changing unit increases the priority of the predicted candidate string in which a character located at the deleted character position is a surrounding character arranged at an input position around the deleted character on the input character table and that begins with the input string from which the deleted character has been deleted.

4. The searching device according to any one of claims 1 to 3, wherein
when the deleted character determining unit acquires a plurality of the deleted characters and determines that the deleted character positions of the plurality of deleted characters are different, the changing unit increases the priority of the predicted candidate string in which a character located at a first character position behind the deleted character position of the latest deleted character is a first deleted character and that begins with the input string from which the plurality of deleted characters have been deleted, wherein the deleted character position of the first deleted character is determined to be the first character position.

5. The searching device according to any one of claims 1 to 4, wherein
when a new input character is input at the deleted character position of a second deleted character, the changing unit returns the priority of the predicted candidate string of which the priority has been changed on the basis of the second deleted character and that begins with the input string to which the new input character has been input, to an original priority.

6. A searching method comprising:
acquiring an input string input by a user;
extracting a predicted candidate string that begins with the input string;
acquiring a deleted character deleted from the input string, and determining a deleted character position that is a character position of the deleted character in the input string; and
changing a priority of the predicted candidate string that begins with the input string from which the deleted character has been deleted on the basis of the deleted character and the deleted character position.

7. A computer-readable storage medium that stores computer-executable instructions for performing a searching function comprising:
acquiring an input string input by a user;
extracting a predicted candidate string that begins with the input string;
acquiring a deleted character deleted from the input string, and determining a deleted character position that is a character position of the deleted character in the input string; and
changing a priority of the predicted candidate string that begins with the input string from which the deleted character has been deleted on the basis of the deleted character and the deleted character position.
